# EUROPEAN PATENT APPLICATION

(11) **EP 3 882 758 A1**
(43) Date of publication of application: **22.09.2021**
(21) Application number: 20207409.2
(22) Date of filing: 13.11.2020
(51) Int. Cl.: G06F 3/12

(54) **INFORMATION PROCESSING TERMINAL, IMAGE PROCESSING SYSTEM, AND METHOD PERFORMED BY THE INFROMATION PROCESSING TERMINAL**

(30) Priority: 19.03.2020 US 202016824635
(71) Applicant: Toshiba TEC Kabushiki Kaisha, Tokyo 141-8562 (JP)
(72) Inventor: SUZUKI, Katsunori, Shinagawa-ku, Tokyo 141-8562 (JP)
(74) Representative: Bandpay & Greuter

(57) **Abstract**

An information processing terminal configured to communicate with a plurality of image processing apparatuses, includes a display, a network interface, a memory that stores filter information for filtering apparatus information from each of the image processing apparatuses, and a processor configured to control the network interface to transmit a first request for the apparatus information to the image processing apparatuses upon receipt of a user input, and filter the apparatus information received from the image processing apparatuses according to the filter information, and generate a first screen for the display to present a list of the image processing apparatuses corresponding to the filtered apparatus information.

## Description

### FIELD

Embodiments described herein relate generally to an information processing terminal, an image processing system, and a method performed by the information processing terminal.

### BACKGROUND

In recent years, there has been developed a technology for enabling access to functions of an MFP (Multi Function Peripheral) from wireless terminals, such as smartphones due to the widespread use thereof. By such a technique, a user can, for example, transmit data to be printed from a wireless terminal directly to an MFP for printing. In such a case, the wireless terminal may display a list of MFPs to which the wireless terminal can be wirelessly connected to directly; this allows the user to select one of the MFPs from the list to be used. The wireless terminal transmits data (referred to as "print data" in this context) to the selected MFP and instructs the printing of the transmitted data (i.e., print data).

However, there are cases where too much information is displayed in the list of the MFPs at the wireless terminal. Therefore, the user may not properly select an appropriate MFP to be used from among the listed MFPs.

### BRIEF DESCRIPTION OF THE DRAWINGS

FIG. 1 is a schematic diagram showing an MFP system according to an embodiment.
FIG. 2 is a diagram illustrating a list screen displayed on a wireless terminal in a conventional MFP system.
FIG. 3 is a diagram illustrating a configuration of the MFP according to the embodiment.
FIG. 4 is a diagram illustrating a configuration of a wireless terminal according to the embodiment.
FIG. 5 is a sequence diagram of processing performed by a wireless terminal that displays a list screen of MFPs in the MFP system according to the embodiment.
FIG. 6 is a diagram showing filter information according to the embodiment.
FIG. 7 is a diagram showing another filter information according to the embodiment.
FIG. 8 is a diagram showing filter setting information according to the embodiment.
FIG. 9 is a diagram illustrating a filter registration screen according to the embodiment.
FIG. 10 is a diagram illustrating a list screen displayed on a wireless terminal in the MFP system of the embodiment.

### DETAILED DESCRIPTION

According to one embodiment, an information processing terminal that is configured to communicate with a plurality of image processing apparatuses comprises a display, a network interface, a memory configured to store filter information for filtering apparatus information from each of the image processing apparatuses, and a processor. The processor is configured to control the network interface to transmit a first request for apparatus information to the image processing apparatuses upon receipt of a user input, and then filter the apparatus information received from the image processing apparatuses according to the filter information, and generate a first screen for the display. The first screen for presenting a list of the image processing apparatuses corresponding to the filtered apparatus information.

Preferably, the processor is further configured to, upon selection of one of the listed image processing apparatuses, control the network interface to transmit a second request for performing a function to the selected image processing apparatus.

Preferably, the filter information comprises a setting value regarding whether or not the image processing apparatus has a particular hardware component, and the apparatus information comprises an indication whether the image processing apparatus has the particular hardware component.

Preferably, the particular hardware component is an optional component attachable to an image processing apparatus.

Preferably, the filter information comprises a setting value regarding whether or not the image processing apparatus has received an authentication, and the apparatus information comprises an indication whether the image processing apparatus has received the authentication.

Preferably, the filter information comprises a setting value regarding whether or not the image processing apparatus conforms to a particular law, and the apparatus information comprises an indication whether the image processing apparatus conforms to the particular law.

Preferably, the filter information comprises a setting value regarding whether or not the image processing apparatus has a particular function, and the apparatus information comprises an indication whether the image processing apparatus provides the particular function.

Preferably, the processor is further configured to: after generating the first screen, generate a second screen, upon receipt of a user input, by which the filter information can be updated; filter the apparatus information according to the updated filter information if the filter information is updated; and update the first screen presenting a list of the image processing apparatuses corresponding to the apparatus information filtered according to the updated filter information.

Preferably, the processor is configured to control the network interface to transmit the first request for apparatus information together with the filter information to the image processing apparatuses upon receipt of a user input, and each of the image processing apparatuses is configured to transmit the apparatus information to the information processing terminal when it satisfies a condition registered in the filter information.

Preferably, the request for the apparatus information is broadcast over a wireless network.

There is also provided a method performed by an information processing terminal configured to communicate with a plurality of image processing apparatuses, the method comprising: storing filter information for filtering apparatus information from the image processing apparatuses; transmitting a first request for the apparatus information to the image processing apparatuses upon receipt of a user input; and filtering the apparatus information received from the image processing apparatuses according to the filter information, and generating a first screen for the display to present a list of the image processing apparatuses corresponding to the filtered apparatus information.

Preferably, the method further comprises, upon selection of one of the listed image processing apparatuses, transmitting a second request for performing a function to the selected image processing apparatus.

Preferably, the method further comprises: after generating the first screen, generating a second screen, upon receipt of a user input, by which the filter information can be updated; filtering the apparatus information according to the updated filter information if the filter information is updated; and updating the first screen presenting a list of the image processing apparatuses corresponding to the apparatus information filtered according to the updated filter information.

Preferably, the filter information comprises a setting value regarding at least one of: whether or not the image processing apparatus has a particular hardware component; whether or not the image processing apparatus has received an authentication; whether or not the image processing apparatus conforms to a particular law; and whether or not the image processing apparatus has a particular function.

Hereinafter, a terminal device according to an embodiment and a method for searching for an image processing apparatus will be described with reference to the accompanying drawings.

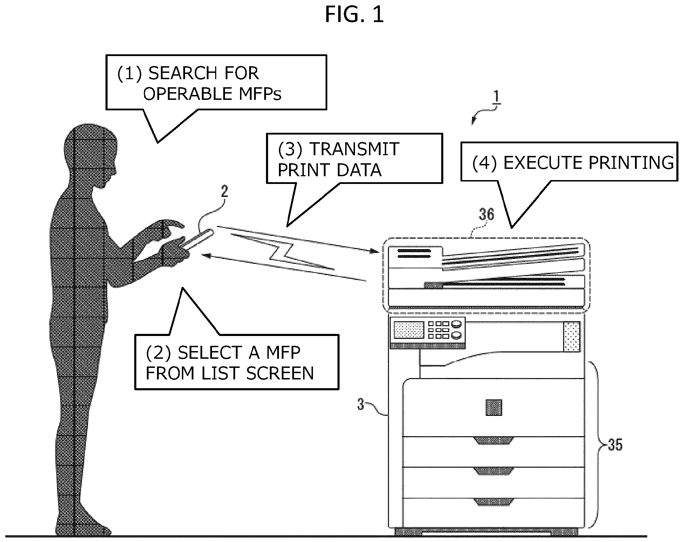

FIG. 1 is a schematic diagram showing an MFP system 1 according to an embodiment. The MFP system 1 is a system that enables various functions of an MFP 3 to be available from a wireless terminal 2. For example, the wireless terminal 2 is an information communication terminal having a wireless communication function, such as a smartphone or a tablet. The wireless terminal 2 and the MFP 3 are configured to be able to communicate with each other. For example, the wireless terminal 2 is installed with an application that makes the functions of the MFP 3 available via wireless communication (hereinafter referred to as "MFP application"). The user can remotely use various functions of the MFP 3 (hereinafter referred to as "MFP functions") by operating the MFP application. For example, the MFP functions include a printer function, a scanner function, a copy function, a fax function, and the like.

As one example of such MFP functions, the MFP system 1 in which the printer function of the MFP 3 is made available from the wireless terminal 2 is shown in FIG. 1. In this case, (1) the user first searches for MFPs 3 available from the wireless terminal 2 by operating the MFP application on the wireless terminal 2. The MFPs 3 discovered by this search are listed on the wireless terminal 2. Hereinafter, a screen on which the wireless terminal 2 displays a list of the MFPs 3 is referred to as a "list screen". Then, (2) the user selects one of the listed MFPs 3 to be used. As a result, (3) the print data is transmitted from the wireless terminal 2 to the selected MFP 3. Then, (4) the MFP 3 executes the printing process based on the print data received from the wireless terminal 2.

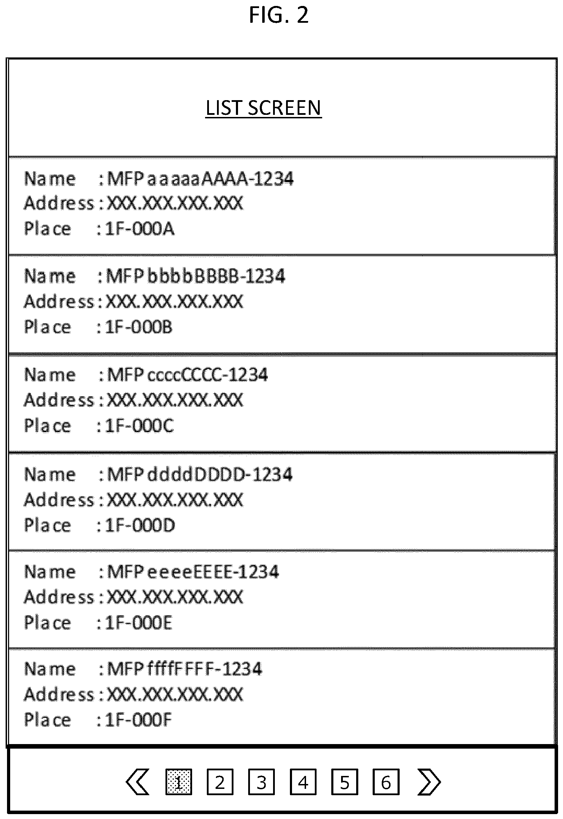

FIG. 2 is a diagram illustrating a list screen displayed on a wireless terminal in a conventional MFP system 1. For example, FIG. 2 shows a list screen in which six different MFPs which were discovered by a search are displayed. Hereinafter, information on each MFP displayed on such a list screen will be referred to as "apparatus information". The list screen shown in FIG. 2 includes names, addresses (e.g., an IP or network address), and places (e.g., room numbers) as apparatus information for each MFP. The user can instruct the selected MFP to execute the desired MFP function by selecting the MFP to be used from among the MFPs listed in this manner.

However, when many MFPs are displayed on the list screen, the user may not be able to quickly find the apparatus information of the MFP that he or she wants to use. For example, when the search result is divided into a plurality of pages as shown in the example shown in FIG. 2, the user needs to search for a desired MFP by switching the pages, which takes a lot of time. In this manner, in the conventional method for displaying the list screen, the user may not be able to properly select a desired MFP from among the listed MFPs.

The MFP system 1 of the present embodiment allows a user to appropriately select an MFP to be used from among the MFPs listed.

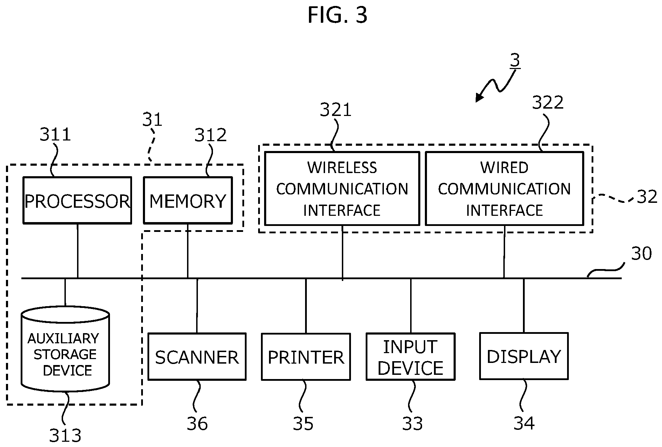

FIG. 3 is a diagram showing a configuration of the MFP 3 according to the present embodiment. For example, the MFP 3 includes a processor 311, a memory 312, an auxiliary storage device 313, a communication unit 32, an input device 33, a display 34, a printer 35, and a scanner 36, and a bus 30 for connecting them. The MFP 3 functions as an information processing apparatus that provides an MFP function by loading a program stored in the auxiliary storage device 313 into the memory 312 and executing the program by the processor 311. For example, the program described herein is a program such as BIOS (Basic Input Output System), OS (Operating system), or various firmware.

The processor 311, the memory 312, and the auxiliary storage device 313 are not limited to any specific type or types as long as they can operate to cause the MFP 3 to function as an information processing apparatus for providing the MFP function(s). For example, the processor 311 is a CPU (Central Processing Unit). The processor 311 may also include a Graphics Processing Unit (GPU). Further, for example, the memory 312 is a random access memory (RAM). The memory 312 may also include a read only memory (ROM). The auxiliary storage device 313 is a storage device such as a magnetic hard disk device (also referred to as a solid-state storage device).

All or a part of the functions of the MFP 3 may be performed by hardware such as an ASIC (Application Specific Integrated Circuit), a PLD (Programmable Logic Device), or an FPGA (Field Programmable Gate Array). The program executed may be recorded on a computer-readable, non-transitory recording medium. The computer-readable recording medium is, for example, a flexible disk, a magneto-optical disk, a portable medium such as a ROM, a CD-ROM, or the like, a storage device such as a hard disk incorporated in a computer system, or the like. The program may be transmitted over a telecommunications line in some examples.

As described above, the processor 311, the memory 312, and the auxiliary storage device 313 together function to serve as a controller for allowing the MFP 3 to provide MFP functions. Therefore, in the following description, the processor 311, the memory 312, and the auxiliary storage device 313 are sometimes collectively referred to as "controller 31." The controller 31 has a function of transmitting the apparatus information of its own apparatus to the wireless terminal 2 in response to the request of the wireless terminal 2. The controller 31 has a function of executing the designated MFP function in response to a request from the wireless terminal 2. The controller 31 stores various setting information necessary for performing these functions in the auxiliary storage device 313.

The configuration of the controller 31 is not limited to a specific configuration as long as it can cause the MFP 3 to provide the MFP functions by executing the program. The auxiliary storage device 313 stores various pieces of setting information necessary for realizing functions of the controller 31. More specifically, the auxiliary storage device 313 stores information necessary for the controller 31 to generate apparatus information of its own apparatus as setting information.

The communication unit 32 is a communication interface configured to connect the MFP 3 and the wireless terminal 2 to communicate with each other. Here, the communication unit 32 includes a wireless communication interface circuit 321 and a wired communication interface circuit 322. As a result, the MFP 3 can directly or indirectly communicate with the wireless terminal 2.

The input device 33 is an input device, such as a touch panel, a mouse, and a keyboard. The input device 33 receives input of various operations to the MFP 3, and outputs the input information to the processor 311. The processor 311 executes processing according to the input information, whereby various MFP functions are executed in the MFP 3.

The display 34 is a display device such as a CRT (Cathode Ray Tube) display, a liquid crystal display, an organic EL (Electro-Luminescence) display, or the like. The display 34 displays various kinds of information related to the operation of the MFP 3. For example, information to be displayed by the display 34 is output from the processor 311.

The printer 35 can form an image on a sheet based on scan data generated by the scanner 36 or scan data received via a communication path. For example, the printer 35 includes an image forming unit for forming a desired image on a sheet, a sheet accommodating unit for storing sheets, and the like. The image forming unit forms an electrostatic latent image on a photosensitive drum according to the generated or received scan data, and the electrostatic latent image is developed by using a developer, then the developed image is transferred to a sheet. The developer is, for example, a toner. The toner may be a decolorable toner which can be decolorized at or above a predetermined temperature. The image forming unit fixes the developed image (e.g., toner image) to the sheet by heating and pressing the sheet in a fixing unit. The sheets that are printed may be a sheet stored in a sheet accommodating unit or a sheet that has been manually inserted.

In response to the instruction from the controller 31, the scanner 36 reads the appearance of a read object as light and dark signals. For example, the scanner 36 scans the object to be read by using an image sensor such as a CCD (Charge coupled device) or a CIS (contact image sensor). The scanner 36 outputs the scanned data to the controller 31.

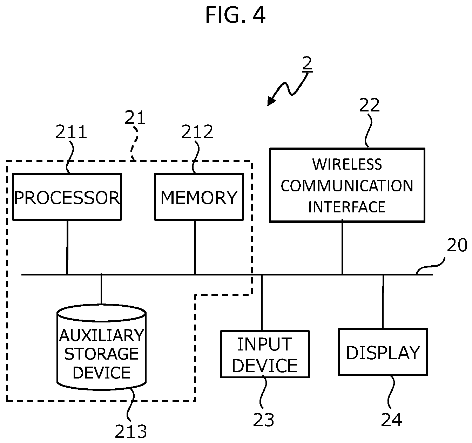

FIG. 4 is a diagram illustrating a configuration of the wireless terminal 2 according to the present embodiment. For example, the wireless terminal 2 includes a processor 211, a memory 212, an auxiliary storage device 213, a wireless communicator 22, an input device 23, and a display 24, and a bus 20 connecting them. The wireless terminal 2 functions as an information processing apparatus having a wireless communication function by loading a program stored in the auxiliary storage device 213 onto the memory 212 and executing the program by the processor 211. For example, the program referred to herein is a program such as BIOS, OS, or various firmware.

In general, the processor 211, the memory 212, and the auxiliary storage device 213 are not limited to any specific types as long as together they can cause the wireless terminal 2 to function as the information processing apparatus having a wireless communication function. For example, the processor 211 may be a CPU. The processor 211 may include a GPU. Further, for example, the memory 212 is a RAM. The memory 212 may include a ROM. The auxiliary storage device 213 is a storage device such as a magnetic hard disk device or a semiconductor storage device.

All or part of the functions of the wireless terminal 2 may be performed by hardware, such as an ASIC, a PLD, an FPGA, or the like. The program may be recorded on a computer-readable, non-transitory recording medium. The computer-readable recording medium is, for example, a flexible disk, a magneto-optical disk, a portable medium such as a ROM, a CD-ROM, or the like, a storage device such as a hard disk incorporated in a computer system, or the like. The program may be transmitted over a telecommunications line.

The processor 211, the memory 212, and the auxiliary storage device 213 together function as a controller for causing the wireless terminal 2 to function as an information processing apparatus having wireless communication functions. Therefore, in the following description, the processor 211, the memory 212, and the auxiliary storage device 213 in some instances may be collectively referred to as "controller 21." The controller 21 executes the MFP application and thus has a function of instructing the MFP 3 to execute an MFP function.

Specifically, the controller 21 also has a function of searching for MFPs 3 that can be used in accordance with the user's input operation, and acquiring the apparatus information from each of the MFPs 3 that have been discovered in the searching. The controller 21 has a function of generating a list screen indicating the available MFPs 3 based on the apparatus information acquired from the discovered MFPs 3. The controller 21 also has a function to display the generated list screen on the display 34, and to then instruct the MFP 3 selected from the list screen to execute the designated MFP function.

The wireless communicator 22 is a wireless communication interface configured to connect the wireless terminal 2 and the MFP 3 to communicate with each other. For example, the wireless communication interface is a communication interface that connects to a mobile phone network such as a third generation (3G) or a fourth generation (4G) wireless network. Also, for example, the wireless communication interface may be a wireless LAN communication interface such as Wi-Fi®.

The input device 23 is an input device, such as a touch panel, a mouse, and a keyboard. The input device 23 receives input of various operations to the wireless terminal 2, and outputs input information to the processor 211. The processor 211 instructs the MFP application to execute processing corresponding to the input information, thereby instructing the MFP 3 to execute various MFP functions.

The display 24 is a display device such as a CRT display, a liquid crystal display, or an organic EL display. The display 24 displays various information related to the operation of the wireless terminal 2. For example, an operation screen of the MFP application is displayed on the display 24. Further, the information to be displayed on the display 24 is output from the processor 211.

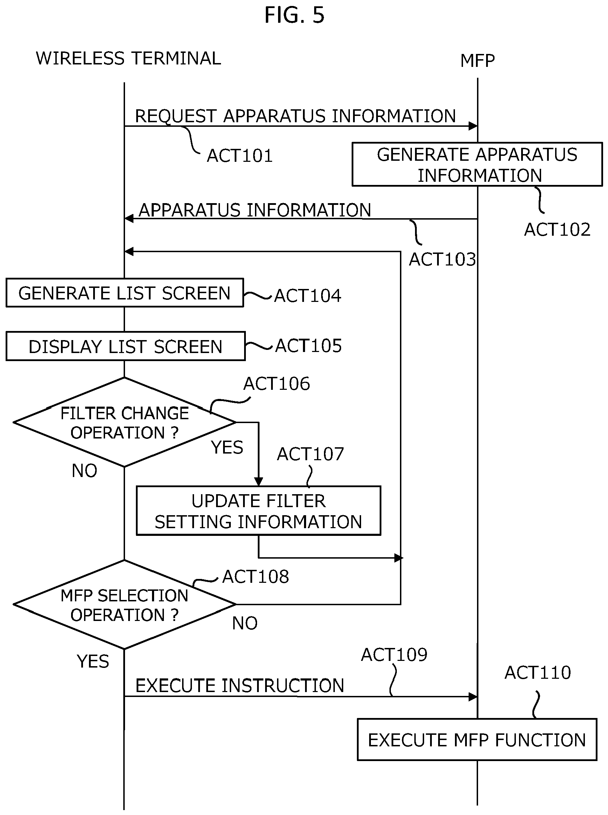

FIG. 5 is a sequence diagram showing a process performed by the wireless terminal 2 that displays a list screen of MFPs 3 in the MFP system 1 according to the present embodiment. At the beginning the processing shown in FIG. 4, the MFP application is executed by the wireless terminal 2. In this state, the MFP application waits for an input of an operation for selecting one MFP function from among a plurality of MFP functions.

In this state, the user inputs an operation for selecting an MFP function to be used for the MFP application. The controller 21 of the wireless terminal 2 performs processing for searching for MFPs 3 available in response to the input of the operation. Specifically, the controller 21 broadcasts a response request for apparatus information over a network (ACT 101, apparatus information request). The apparatus information request is received by each of the MFPs 3 connected to the network.

Subsequently, in each of the MFPs 3, the controller 31 generates the apparatus information to be transmitted to the wireless terminal 2 in response to the apparatus information request (ACT 102). Specifically, the controller 31 generates the apparatus information including filter information in addition to the conventional apparatus information shown in FIG. 2 (hereinafter referred to as "basic information"). The filter information is information for filtering apparatus information to be displayed in the list screen by the wireless terminal 2. The controller 31 transmits the generated apparatus information to the wireless terminal 2 that is the source of the request (ACT 103). The wireless terminal 2 receives the apparatus information transmitted from the MFP 3.

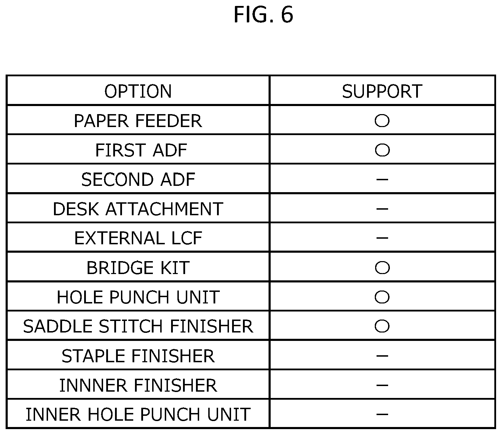

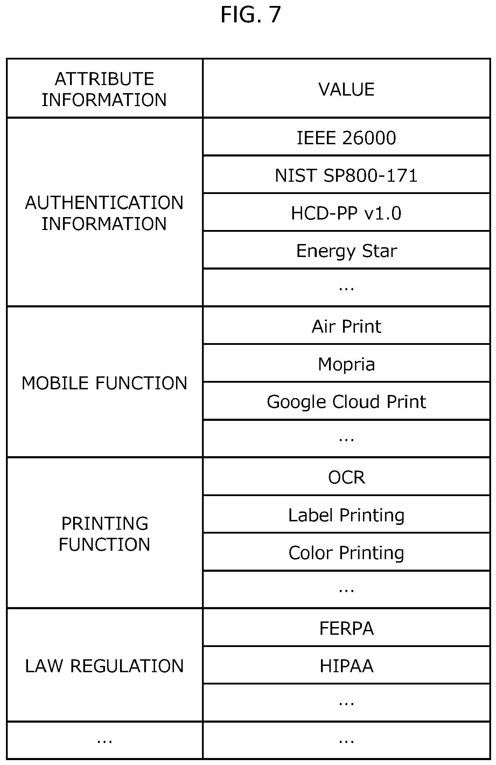

FIGS. 6 and 7 are diagrams showing filter information in the present embodiment. For example, FIG. 6 shows filter information indicating an option configuration of MFP 3. In general, the function of the MFP can be extended by adding components to the MFP. Hereinafter, the component for extension of the function will be referred to as "option". The example of the filter information shown in FIG. 6 includes a paper feeder, a first ADF (Auto Document Feeder), a second ADF, a disk attachment, an external LCF (Large Capacity Feeder), a bridge kit, a hole punch unit, a saddle stitch finisher, a staple finisher, an inner finisher, and an inner hole punch unit as possible options that can be added to the MFP 3. In the MFP system 1 of the present embodiment, each MFP 3 generates filter information indicating the respective option configurations, and supplies the filter information to the wireless terminal 2. Accordingly, in the wireless terminal 2, it is possible to narrow down the apparatus information to be displayed in the list screen based on the option configuration of each of the MFPs 3. Therefore, the user can easily identify the desired MFP 3 from the list screen.

FIG. 7 shows filter information indicating various attributes of the MFP 3. Specifically, FIG. 7 shows attribute information, such as authentication information of the MFP 3, a mobile function, a law regulation, and the like, as an example of filter information. The "authentication information" shown in FIG. 7 is information indicating various authentications received by the MFP 3, such as IEEE 26000 and NIST SP800-171. The "mobile function" is information indicating types of functions for the mobile terminal, which are supported by the MFP 3, such as "AIR Print and Google Cloud Print. The "printing function" is information indicating types of various printing functions supported by the MFP 3, such as OCR, label printing, and color printing. The "law regulation" is information indicating various laws with which the MFP 3 is compliant, such as FERPA (Family Educational Rights and Privacy Act) and HIPAA (Health Insurance Portability and Accountability Act). Note that these pieces of attribute information are examples of the filter information. The filter information may also include any other information than that described above as long as the information is related to an MFP 3.

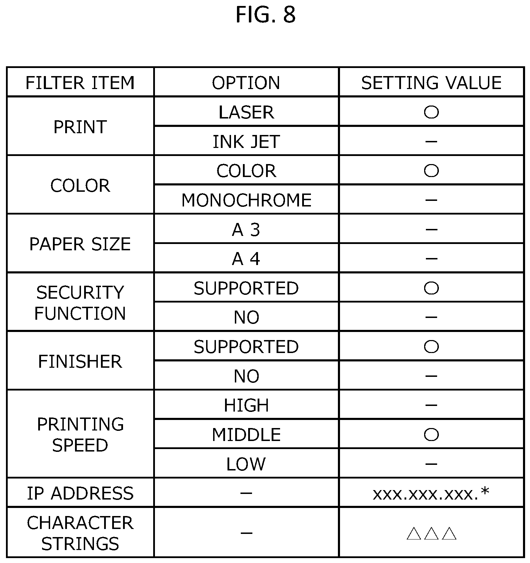

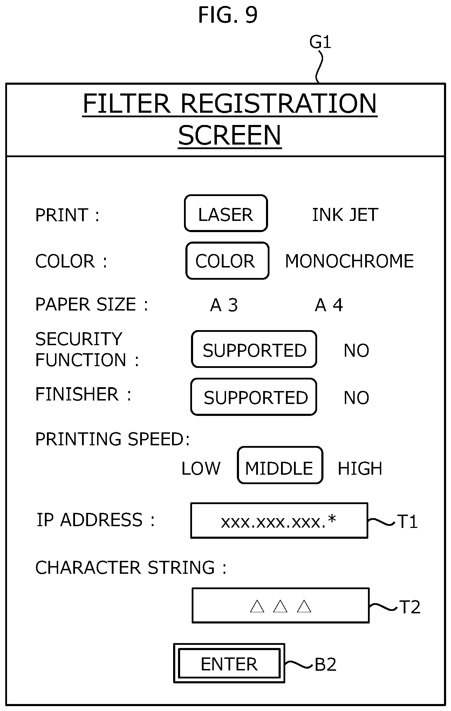

Returning to the description of FIG. 5, following ACT 103, at the wireless terminal 2, the controller 21 generates the apparatus information screen of the MFPs 3 that are available based on the apparatus information acquired from the MFPs 3 (ACT 104). Here, the controller 21 displays, in the list screen, the apparatus information which matches the current filter setting among the MFPs 3 which have transmitted the apparatus information to the wireless terminal 2. The filter setting is information indicating a condition for filtering the apparatus information of the MFPs 3 to be displayed in the list screen. For example, the controller 21 stores information indicating the filter setting (hereinafter referred to as "filter setting information") in the auxiliary storage device 213 in advance. FIG. 8 shows an example of such filter setting information, and FIG. 9 shows an example of a filter registration screen for registering the filter setting information by the wireless terminal 2.

For example, FIG. 8 shows an example of the filter setting information which defines each option and its value for each filter item. Here, the "filter item" represents an item which can be used as a condition for filtering the apparatus information of the MFPs 3 to be displayed on the list screen. The option represents one or more options for each filter item. The "setting value" represents a setting value set for each option. For example, the filter setting information shown in FIG. 8 extracts apparatus information of MFPs 3, which satisfy all of the following conditions:
(Condition 1) The printing method is "laser".
(Condition 2) Color printing can be carried out.
(Condition 3) Security function is supported.
(Condition 4) The finisher is provided.
(Condition 5) Printing speed is medium speed.
(Condition 6) IP address is "xxx. xxx. xxx. *".
(Condition 7) The apparatus information includes a specific character string "ΔΔΔ".

Here, in condition 6, the "*" sign represents any character string. In the condition 7, the search target of the character string may be information other than the apparatus information. The controller 21 extracts, based on the filter setting information stored in the wireless terminal 2 device, the apparatus information acquired from each of the MFPs 3 that satisfy the filtering condition. The controller 21 generates a list screen based on the extracted apparatus information of the MFPs 3. The controller 21 displays the generated list screen on the display 24 (ACT 105). The controller 21 may extract the apparatus information of the MFPs 3 that satisfy one or more or all of the conditions specified by the filter setting information. Further, the filter setting information may include a setting value for determining the extraction method.

When the list screen is displayed in ACT 105, the controller 21 receives the input of the operation for changing the filter setting information (ACT 106). Hereinafter, this operation will be referred to as a "filter change operation". When the filter change operation is input (ACT 106 - YES), the controller 21 updates the filter setting information in accordance with the input (ACT 107). After updating the filter setting information, the controller 21 returns the process to ACT 104, and updates the list screen based on the updated filter setting information.

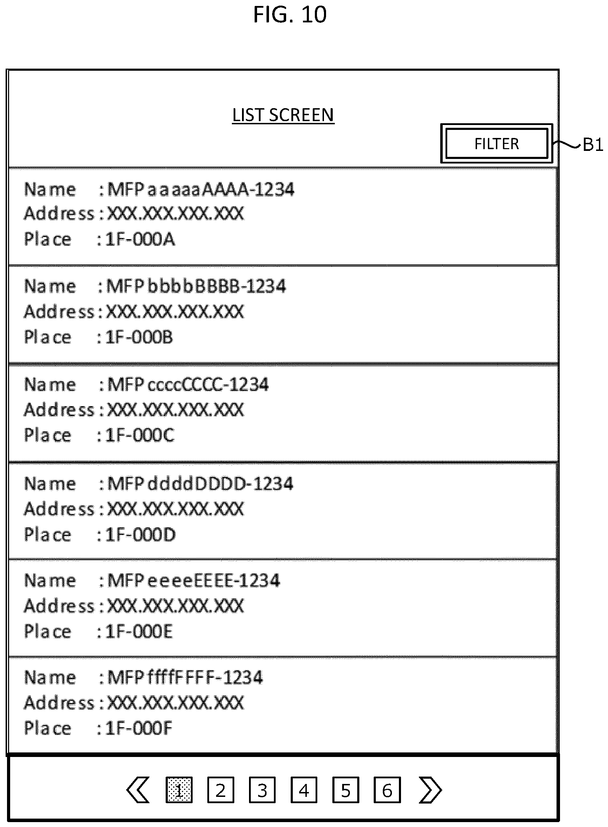

Here, the filter setting information is changed using, for example, the filter registration screen illustrated in FIG. 9. The filter registration screen G1 is displayed when a button interface B 1 in the list screen illustrated in FIG. 10 is pressed, for example. Note that the filter registration screen G1 may be displayed according to other input operations.

In this case, the controller 21 generates the filter registration screen based on the current filter setting information in response to the input of an operation for displaying the filter registration screen. For example, the filter registration screen G1 shown in FIG. 9 is an example of a filter registration screen displayed when the filter setting is made as shown in FIG. 8. When the controller 21 displays the filter registration screen, it accepts an input of an operation for changing the current setting value. In this state, the user can input an operation to change the current setting value by operating the filter registration screen. For example, in the example of FIG. 9, the user may change the current setting by inputting an operation for changing selection of options for each filter item "print", "printable color", "paper size", "security function", "finisher", and "print speed". For example, the user can change the current setting value by editing the character string displayed in the text boxes T1 and T2 for each filter item of the "IP address" and the "search character string".

The controller 21 updates the filter setting information in response to the input of the operation to complete the setting of the setting value, e.g. the pressing of the registration button B2. When the filter setting information is updated, the controller 21 extracts the apparatus information of the MFPs 3 based on the updated filter setting information. The controller 21 updates the list screen based on the extraction result.

On the other hand, when the filter change operation is not input in ACT 106 (ACT 106 - NO), the controller 21 accepts an input of an operation for selecting one of the MFPs listed in the list screen and of which an MFP function is to be used (ACT 108). Hereinafter, this operation will be referred to as an "MFP selection operation". If the MFP selection operation is not input (ACT 108 - NO), the controller 21 returns the process to ACT 104. On the other hand, when the MFP selection operation is input in ACT 108 (ACT 108 - YES), the controller 21 instructs the selected MFP 3 to execute the MFP function as designated by the user (ACT 109, execution instruction). In response to the execution instruction, the MFP 3 executes the designated MFP function (ACT 110), and responds to the wireless terminal 2 as necessary.

According to the MFP system 1 of the present embodiment, the wireless terminal 2 can display apparatus information of MFPs 3 extracted based on the filter setting information in the list screen. Therefore, only those MFPs 3 satisfying a predetermined condition from among all the MFPs 3 discovered by the search will be displayed on the list screen. In other words, the user can select one of the MFPs 3 that has an MFP function that the user wants to use. Therefore, the user can find and select an appropriate MFP more easily.

### (First Modification Example)

The function of extracting the apparatus information of MFPs 3 based on the filter setting information by the wireless terminal 2 may be replaced with the following processing. For example, each of the MFPs 3 may be configured to transmit the apparatus information to the wireless terminal 2 only if the MFP 3 satisfies the condition registered in the filter setting information. In this case, the wireless terminal 2 may broadcast the filter setting information together with the apparatus information request. Alternatively, the wireless terminal 2 may be configured to separately transmit the filter setting information to the MFPs 3 that have already received the apparatus information request. By doing so, it is possible to reduce the amount of data communicated between the wireless terminal 2 and the MFPs 3 and the processing load of the wireless terminal 2 for the filtering operation.

### (Second Modification Example)

Extraction of apparatus information of MFPS 3 based on the filter setting information may be performed by retrieval of the apparatus information from another system or may be performed by searching for other information provided by such a system. For example, when there is an external system that provides information about each MFP 3, extraction of apparatus information of each MFP 3 may be performed by searching external information provided by the external system. In this case, the wireless terminal 2 is configured to display in the list screen the apparatus information acquired from the MFPs 3 that has been hit in searching the external information. In this case, in the wireless terminal 2, instead of acquiring the apparatus information from each of the MFP 3s, the external information provided by the external system for each MFP 3 may be acquired as the apparatus information.

The icon in the aforementioned embodiments is an example of information corresponding to the appearance of the MFP 3. In addition, the attribute information in the embodiments is an example of information corresponding to a feature or device aspect that might not be obvious from the external appearance of the MFP.

"Decolorization" or "decolorable" as used in the present disclosure refers to a specialized toner or ink that can initially be any color (e.g., white, black, red, blue, green, etc.) different from the color of a sheet on which printing is being performed, but which becomes the color (or substantially so) of the sheet or otherwise transparent (or substantially so) upon heating above a threshold temperature or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An information processing terminal configured to communicate with a plurality of image processing apparatuses, the information processing terminal comprising:
a display;
a network interface;
a memory configured to store filter information for filtering apparatus information about each of the image processing apparatuses; and
a processor configured to:
control the network interface to transmit a first request for apparatus information to the image processing apparatuses upon receipt of a user input, and
filter the apparatus information received from the image processing apparatuses according to the filter information, and generate a first screen for the display presenting a list of the image processing apparatuses corresponding to the filtered apparatus information.

2. The information processing terminal according to claim 1, wherein
the processor is further configured to, upon selection of one of the listed image
processing apparatuses, control the network interface to transmit a second request for performing a function to the selected image processing apparatus.

3. The information processing terminal according to claim 1 or 2, wherein
the filter information comprises a setting value regarding whether or not the image processing apparatus has a particular hardware component, and
the apparatus information comprises an indication whether the image processing apparatus has the particular hardware component.

4. The information processing terminal according to claim 3, wherein
the particular hardware component is an optional component attachable to an image processing apparatus.

5. The information processing terminal according to any one of claims 1 to 4, wherein
the filter information comprises a setting value regarding whether or not the image processing apparatus has received an authentication, and
the apparatus information comprises an indication whether the image processing apparatus has received the authentication.

6. The information processing terminal according to any one of claims 1 to 5, wherein
the filter information comprises a setting value regarding whether or not the image processing apparatus conforms to a particular law, and
the apparatus information comprises an indication whether the image processing apparatus conforms to the particular law.

7. The information processing terminal according to any one of claims 1 to 6, wherein
the filter information comprises a setting value regarding whether or not the image processing apparatus has a particular function, and
the apparatus information comprises an indication whether the image processing apparatus provides the particular function.

8. The information processing terminal according to any one of claims 1 to 7, wherein
the processor is further configured to:
after generating the first screen, generate a second screen, upon receipt of a user input, by which the filter information can be updated, filter the apparatus information according to the updated filter information if the filter information is updated, and
update the first screen presenting a list of the image processing apparatuses corresponding to the apparatus information filtered according to the updated filter information.

9. The information processing terminal according to any one of claims 1 to 8, wherein
the processor is configured to control the network interface to transmit the first request for apparatus information together with the filter information to the image processing apparatuses upon receipt of a user input, and
each of the image processing apparatuses is configured to transmit the apparatus information to the information processing terminal when it satisfies a condition registered in the filter information.

10. The information processing terminal according to any one of claims 1 to 9, wherein
the request for the apparatus information is broadcast over a wireless network.

11. A method performed by an information processing terminal configured to communicate with a plurality of image processing apparatuses, the method comprising:
storing filter information for filtering apparatus information from the image processing apparatuses;
transmitting a first request for the apparatus information to the image processing apparatuses upon receipt of a user input; and
filtering the apparatus information received from the image processing apparatuses according to the filter information, and generating a first screen for the display to present a list of the image processing apparatuses corresponding to the filtered apparatus information.

12. The method according to claim 11 further comprising, upon selection of one of the listed image processing apparatuses, transmitting a second request for performing a function to the selected image processing apparatus.

13. The method according to claim 11 or 12 further comprising:
after generating the first screen, generating a second screen, upon receipt of a user input, by which the filter information can be updated;
filtering the apparatus information according to the updated filter information if the filter information is updated; and
updating the first screen presenting a list of the image processing apparatuses corresponding to the apparatus information filtered according to the updated filter information.

14. The method according to any one of claims 11 to 13, wherein the filter information comprises a setting value regarding at least one of:
whether or not the image processing apparatus has a particular hardware component;
whether or not the image processing apparatus has received an authentication;
whether or not the image processing apparatus conforms to a particular law; and
whether or not the image processing apparatus has a particular function.
